# EUROPEAN PATENT SPECIFICATION

(11) **EP 3 175 691 B1**
(45) Date of publication and mention of the grant of the patent: **16.12.2020**
(21) Application number: 16199325.8
(22) Date of filing: 17.11.2016
(51) Int. Cl.: A01B 51/04, A01B 69/00, B62D 13/02

(54) **FLEXIBLE WHEEL TRACK SYSTEM FOR IN-FIELD TRAILER**
FLEXIBLES RADVERFOLGUNGSSYSTEM FÜR FELDANHÄNGER
SYSTÈME D'EMPATTEMENT DE ROUE FLEXIBLE POUR REMORQUE DE PLEIN CHAMP

(30) Priority: 24.11.2015 DK 201570755
(43) Date of publication of application: 07.06.2017
(73) Proprietor: Agro Intelligence ApS, 8200 Aarhus N (DK)
(72) Inventor: Green, Ole, 6940 Lem St (DK)
(74) Representative: Rasmussen, Martin Hoffgaard

(56) References cited:
- EP-A1- 0 781 699
- EP-A1- 1 205 375
- WO-A1-2011/051617
- DE-U1-202004 001 249

## Description

### FIELD OF THE INVENTION

The present invention relates to a trailer to be pulled by a vehicle, typically a tractor. The trailer is designed to reduce a level of soil compaction by the combination of tractor and the trailer.

### BACKGROUND OF THE INVENTION

Soil compaction is the increase of density or decrease in porosity of soil, and can adversely affect the properties of the soil in respect of growing and sustaining crops. In agriculture typically due to loads from machinery such as tractors and trailers.

There have been several proposals for agricultural trailers that reduce the load from the wheels exerted on the soil over which the trailer passes. These proposals suffer from the disadvantages that they are mechanically very complex, too expensive, and/or inefficient in reducing or distributing the load.

WO2011051617 discloses a method for controlling the angular pivotal movement of two steering axles relative to the chassis of a transport vehicle coupled with another vehicle by means of a drawbar pivotably mounted relative to said chassis, about a pivot axis separated by a predetermined distance from the pivot axes of the first and second steering axles. The method includes the following steps: making a note of the angular position of the drawbar relative to the main axis of the chassis of the vehicle, and controlling the pivotal movement of a first steering axle according to a first angle predetermined in accordance with a first function of the angular position of the drawbar; controlling the pivotal movement of a second steering axle according to a second angle predetermined in accordance with a second function of the angular position of the first steering axle.

Hence, an improved trailer that is mechanically simple, inexpensive and effective in redistribution wheel load would be advantageous.

### OBJECT OF THE INVENTION

In particular, it may be seen as a further object of the present invention to provide a chassis for an agricultural trailer that solves the above mentioned problems of the prior art with mechanical complexity, price and load redistribution.

### SUMMARY OF THE INVENTION

Thus, the above described object and several other objects are intended to be obtained in a first aspect of the invention by providing a chassis of a trailer to be pulled by a vehicle, the chassis having a front axle and a rear axle, each axle being equipped with right and left wheels mounted to be freely rotating about an axis parallel with the axle, the front and rear axles being mounted on a frame of the chassis via front and rear turntables rotatable about vertical axes, the chassis further comprising a drawbar with one end attached to the front axle via a pivotable connection; wherein the pivotable connection of the drawbar and the turntable of the rear axle can be moved between and locked into first positions where the drawbar is perpendicular to the front axle and the rear axle is perpendicular to a longitudinal direction of the frame and second positions where the drawbar is oblique to the front axle and the rear axle is oblique to the longitudinal direction of the frame so that when the chassis is pulled by the drawbar the frame of the chassis will be oblique to a direction of movement.

In the present description, oblique is intended to mean slanting or inclined in direction to course or position, being neither parallel nor perpendicular nor right angular. A trailer is a carriage intended to be drawn by another vehicle and the trailer is thus not self-propelling. The chassis is the frame and wheels of the trailer. A turntable is a bearing with a vertical axis of rotation, with one support connected to the frame and another support, typically in the form of a circular platform, connected to the axle. For simplicity of language, the first and second positions of the pivotable connection of the drawbar and the turntable of the rear axle will also be referred to as simply the first and second positions of the drawbar and rear axle.

In another aspect, the invention relates to a trailer to be pulled by a tractor and having a chassis according to the first aspect. When pulled by the tractor, the chassis with the drawbar and rear axle in the first positions will cause the wheels of the trailer to follow two narrow tramlines. This in advantageous when driving on a normal road or through narrow passages.

When pulled by the tractor, the chassis with the drawbar and rear axle in the second positions will cause the trailer to be oriented oblique to the direction of movement and the wheels will be spread out in a direction perpendicular to the direction of movement. Here, the wheels of the tractor and of the front and rear axles of the trailer will follow different tramlines. This is advantageous when a more distributed load is desired in order to reduce soil compaction on a field.

In an alternative formulation, when pulled by the tractor with the drawbar and rear axle in the second positions, a support surface of a left side wheel of the trailer exerts load to an area to a left side relative to a leftmost side wheel of the tractor and so that a support surface of a right side wheel of the trailer exerts load to an area to a right side relative to a rightmost side wheel of the tractor.

In a third aspect, the invention provides a method for reducing soil compaction when driving on a field with a pulled trailer, the method comprising providing a trailer having a chassis according to the first aspect and setting and locking the pivotable connection of the drawbar and the turntable of the rear axle into the second positions.

The first and second aspect of the present invention may each be combined with any of the other aspects as well as the different embodiments provided in relation to each aspect.

### BRIEF DESCRIPTION OF THE FIGURES

The different aspects of the invention will now be described in more detail with regard to the accompanying figures. The figures show one way of implementing the present invention and is not to be construed as being limiting to other possible embodiments falling within the scope of the attached claim set.
Figure 1 illustrates a trailer and a chassis according to embodiments of the invention with the drawbar and rear axle in the first positions and being pulled by a tractor.
Figure 2 illustrates a trailer and a chassis according to embodiments of the invention where the drawbar and rear axle have been set in the second positions while the trailer was at a halt.
Figure 3 illustrates a trailer and a chassis according to embodiments of the invention with the drawbar and rear axle in the second positions and being pulled by a tractor.
Figure 4 is a version of Figure 3 with tramlines of each wheel being drawn up.

### DETAILED DESCRIPTION OF AN EMBODIMENT

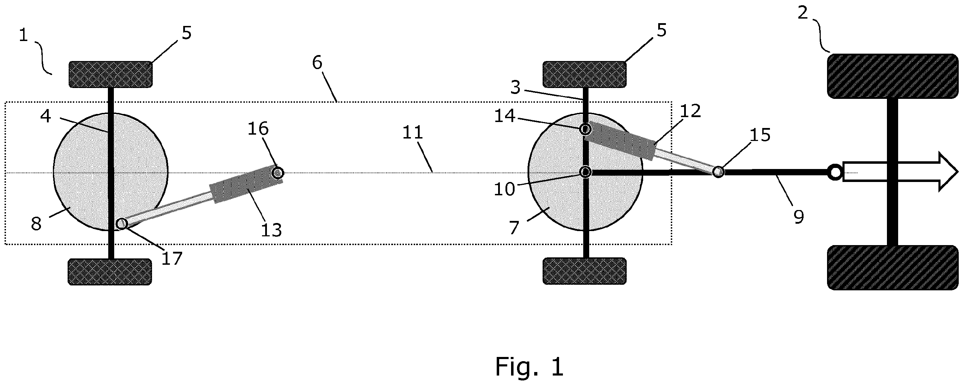

Figure 1 illustrates an embodiment of the invention with a trailer having a chassis 1 being pulled by a tractor 2. The chassis has front and rear axles 3 and 4 with wheels 5, the axles being mounted on a frame 6 via front and rear turntables 7 and 8. The chassis has a drawbar 9 with one end attached to the front axle 3 via a pivotable connection 10 allowing for the drawbar to form oblique angles to the front axle. The rear axle 4 is a through axle with the rear wheels being constrained to be rotating aroung an axis perpendicular to the rear axle.

Whereas front turntables are commonly used as a means to turn a trailer. In such setups, the drawbar will typically be connected to the front axle in a joint that can rotate only around a horizontal axis to accommodate for differences in height between the trailer and the tractor, but will be permanently fixated in a plane perpendicular to the front axle so that the front can be turned with the drawbar.

The turntable holding the rear axle and the drawbar that can be pivoted to be oblique to the front axle are distinctive features of the invention.

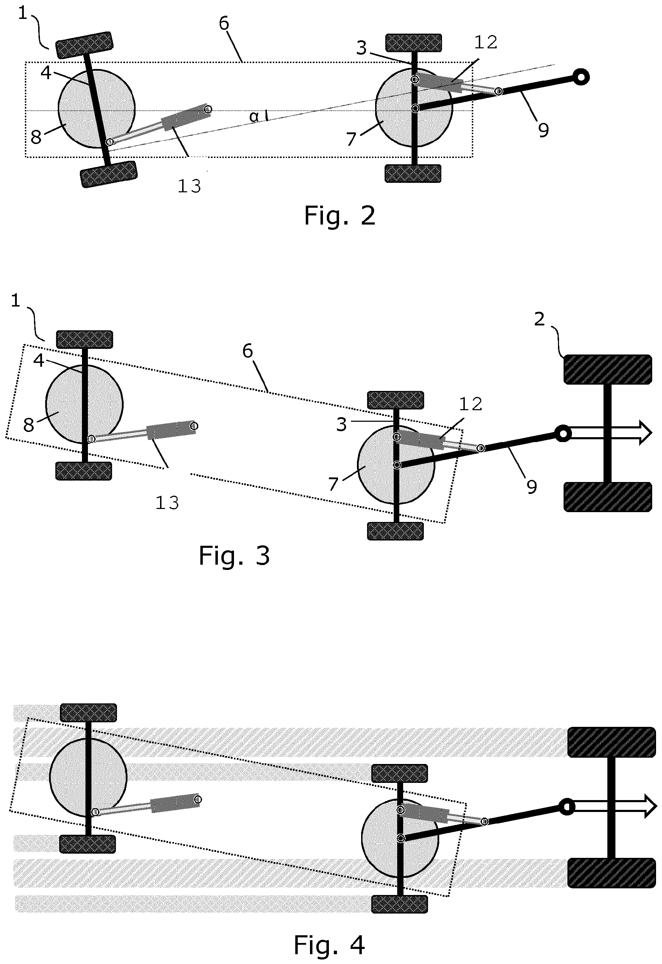

The positions of the drawbar 9 and rear axle 4 in Figure 1 are referred to as their first positions, where the trailer will drive in the direction of its a longitudinal direction of the chassis, illustrated by line 11 in Figure 1, when pulled by the tractor. The drawbar and the rear axle can, via the rear turntable 8 and the pivotal connection 10, be moved between and fixed at different positions forming different angles to the longitudinal direction 11. Figure 2 illustrates the chassis 1 after turning the rear axle and the drawbar an angle α from their first positions of Figure 1 while the trailer stands still.

The drawbar can be turned using an actuator system such as a mechanical actuator 12 involving a housing or cylinder mounted on the front axle 3 with bearing 14 and a piston mounted on the drawbar 9 with bearing 15. Similarly, the rear axle/turntable can be turned using an actuator system such as a mechanical actuator 13 attached to the frame 6 via bearing 16 and to the rear turntable 8 via bearing 17. Each mechanical actuator can be e.g. a hydraulic motor, an electrical motor, a motor propelled via a rotating shank from the tractor, a hand-operated actuator and many others as will be clear to the person skilled in the art. The bearings 14-17 can be e.g. pivot joints, clevis fasteners, etc. For bearing 14 particularly, it might be of interest for it to be rotatable around the axle 3 in order to allow rotations of the drawbar around the front axle to accommodate for differences in height between the trailer and the tractor.

Instead of the externally mounted mechanical actuator 13, the actuator system for rotating the rear turntable 8 can, in an alternative embodiment (not shown), be integrated in the turntable. Here, a motor can drive a gear-wheel mounted on the frame and driving an internal cog-wheel fastened on the turntable, which provides a more protected and durable solution as the linear cylinder-piston actuator 13.

The drawbar and rear axle can be locked into position at at least two positions, the first and second positions. Depending on the type of actuator system and the expected torque on the joints, this locking can be provided by the mechanical actuator itself or it can be an additional, individually actuated locking mechanism such as a peg or a pin entering a grove or a hole. It should be noted that front axle should not be locked into position as the trailer should still be able to turn, only the angle between the front axle and the drawbar should be locked.

Now, turning to Figure 3, here the tractor starts pulling the trailer with the drawbar and rear axle in their second positions and the trailer will align itself oblique to the direction of motion indicated by the arrow between the wheels of the tractor. It is important for the stability that the centre of mass of the trailer will typically only shift very little or not at all (assuming that the mass distribution of the unloaded/loaded trailer is more or less uniform). Only the wheelbase will have effectively narrowed by a factor of cosine a.

The drawbar and rear axle can be moved between the first and second position either when the trailer is at a halt or while it is being pulled, i.e. in motion. When moved while being pulled, the movement of drawbar and rear axle is preferably carried out in synchronisation.

Figure 4 illustrates the tramlines of the tractor and trailer wheels with the drawbar and rear axle in their second positions. The second positions, or the angle a, should be chosen so that the tramlines of the wheels of the trailer are positioned on the outside of or in between the wheels of the tractor in order to reduce the load exerted by the wheels and thereby soil compaction. The exact positions depends on the actual wheelbases and tire widths of the tractor and trailer. Hence, the trailer can have several second positions to be selected between depending on the actual setup.

The chassis is so designed that it can easily be adapted for handling different kinds of loads with the trailer.

It is important to understand that the invention is not limited to a certain number of axles or wheels. It is customary to have several rear axles and several pairs of wheels on each axle. In embodiments with more than one rear axle, each rear axle should be set up equivalent to the rear axle 4 in the description above, and thus be able to move between and be locked at a first and a second position.

## Claims

1. A chassis (1) of a trailer to be pulled by a vehicle, the chassis having a front axle (3) and a rear axle (4), each axle being equipped with right and left wheels (5) mounted to be freely rotating about an axis parallel with the axle, the front and rear axles being mounted on a frame (6) of the chassis (1) via front and rear turntables (7, 8) rotatable about vertical axes, the chassis further comprising a drawbar (9), **characterised in that** the drawbar has one end attached to the front axle (3) via a pivotable connection; wherein the pivotable connection (10) of the drawbar (9), and the turntable (8) of the rear axle (4) can be moved between and locked into first positions where the drawbar (9) is perpendicular to the front axle (3), and the rear axle (4) is perpendicular to a longitudinal direction of the frame (6), and second positions where the drawbar (9) is oblique to the front axle (3), and the rear axle (4) is oblique to the longitudinal direction of the frame.

2. The chassis according to claim 1, wherein in the second positions, as the drawbar (9) is oblique to the front axle (3), and the rear axle (4) is oblique to the longitudinal direction of the frame (6), when the chassis (1) is pulled by the drawbar (9), the frame (6) of the chassis is caused to be oblique to a direction of movement.

3. The chassis according to claim 1, further comprising an actuator system (12, 13) for moving the pivotable connection (10) of the drawbar (9), and the turntable (8) of the rear axle (4) between the first and second positions.

4. A trailer configured to be pulled by a tractor (2) and having a chassis (1) according to claim 1.

5. The trailer according to claim 4, wherein, when the pivotable connection (10) of the drawbar (9), and the turntable (8) of the rear axle (4) are set and locked into the second positions, a support surface of a left side wheel of the trailer is configured to exert load to an area to a left side relative to a leftmost side wheel of the tractor (2) and a support surface of a right side wheel of the trailer is configured to exert load to an area to a right side relative to a rightmost side wheel of the tractor (2) when in operation.

6. A method for reducing soil compaction when driving on a field with a pulled trailer, the method comprising providing a trailer having a chassis (1) according to claim 1 and, when the wheels of the tractor and trailer should follow different tramlines in order to reduce a level of soil compaction on a field, setting and locking the pivotable connection (10) of the drawbar (9), and the turntable (8) of the rear axle (4) into the second positions.

7. The method according to claim 6, when the wheels of the tractor and trailer should follow two narrow tramlines, e.g.on a normal road, setting and locking the pivotable connection (10) of the drawbar (9), and the turntable (8) of the rear axle (4) into the first positions.

## Patentansprüche

1. Fahrgestell (1) eines Anhängers, der von einem Fahrzeug gezogen werden soll, wobei das Fahrgestell eine Vorderachse (3) und eine Hinterachse (4) aufweist, wobei jede Achse mit rechten und linken Rädern (5) ausgestattet ist, die frei drehbar um eine Achse parallel zu der Achse montiert sind, wobei die Vorder- und Hinterachsen an einem Rahmen (6) des Fahrgestells (1) über vordere und hintere Drehscheiben (7, 8) montiert sind, die um vertikale Achsen drehbar sind, wobei das Fahrgestell weiter eine Deichsel (9) umfasst,
**dadurch gekennzeichnet, dass** die Deichsel mit einem Ende über eine schwenkbare Verbindung an der Vorderachse (3) befestigt ist; wobei die schwenkbare Verbindung (10) der Deichsel (9) und die Drehscheibe (8) der Hinterachse (4) zwischen ersten Positionen, in denen die Deichsel (9) senkrecht zu der Vorderachse (3) und die Hinterachse (4) senkrecht zu einer Längsrichtung des Rahmens (6) ist, und zweiten Positionen, in denen die Deichsel (9) schräg zu der Vorderachse (3) und die Hinterachse (4) schräg zu der Längsrichtung des Rahmens ist, bewegt und verriegelt werden kann.

2. Fahrgestell nach Anspruch 1, wobei in den zweiten Positionen, wenn die Deichsel (9) schräg zu der Vorderachse (3) und die Hinterachse (4) schräg zu der Längsrichtung des Rahmens (6) ist, wenn das Fahrgestell (1) von der Deichsel (9) gezogen wird, bewirkt wird, dass der Rahmen (6) des Fahrgestells schräg zu einer Bewegungsrichtung steht.

3. Fahrgestell nach Anspruch 1, weiter umfassend ein Antriebssystem (12, 13) zum Bewegen der schwenkbaren Verbindung (10) der Deichsel (9) und der Drehscheibe (8) der Hinterachse (4) zwischen der ersten und zweiten Position.

4. Anhänger, der konfiguriert ist, um von einer Zugmaschine (2) gezogen zu werden und ein Fahrgestell (1) nach Anspruch 1 aufweist.

5. Anhänger nach Anspruch 4, wobei, wenn die schwenkbare Verbindung (10) der Deichsel (9) und die Drehscheibe (8) der Hinterachse (4) in die zweiten Positionen eingestellt und verriegelt sind, eine Stützfläche eines linksseitigen Rades des Anhängers konfiguriert ist, um eine Last auf einen Bereich auf einer linken Seite relativ zu einem am weitesten linksseitigen Rad der Zugmaschine (2) auszuüben, und eine Stützfläche eines rechtsseitigen Rades des Anhängers konfiguriert ist, um eine Last auf einen Bereich auf einer rechten Seite relativ zu einem am weitesten rechtsseitigen Rad der Zugmaschine (2) auszuüben, wenn sie in Betrieb ist.

6. Verfahren zum Verringern der Bodenverdichtung beim Fahren auf einem Feld mit einem gezogenen Anhänger, wobei das Verfahren das Bereitstellen eines Anhängers, der ein Fahrgestell (1) nach Anspruch 1 aufweist, und, wenn die Räder der Zugmaschine und des Anhängers unterschiedlichen Fahrgassen folgen sollen, um einen Grad der Bodenverdichtung auf einem Feld zu verringern, das Einstellen und Verriegeln der schwenkbaren Verbindung (10) der Deichsel (9) und der Drehscheibe (8) der Hinterachse (4) in die zweiten Positionen umfasst.

7. Verfahren nach Anspruch 6, wenn die Räder wenn die Räder der Zugmaschine und des Anhängers zwei schmalen Fahrgassen folgen sollen, z.B. auf einer normalen Straße, Einstellen und Verriegeln der schwenkbaren Verbindung (10) der Deichsel (9) und der Drehscheibe (8) der Hinterachse (4) in die ersten Positionen.

## Revendications

1. Châssis (1) d'une remorque à tracter par un véhicule, le châssis ayant un essieu avant (3) et un essieu arrière (4), chaque essieu étant équipé de roues droite et gauche (5) montées en rotation libre autour d'un axe parallèle à l'essieu, les essieux avant et arrière étant montés sur un cadre (6) du châssis (1) par l'intermédiaire de plaques tournantes avant et arrière (7, 8) pouvant tourner autour d'axes verticaux, le châssis comprenant en outre une barre de traction (9),
**caractérisé en ce que** la barre de traction a une extrémité attachée à l'essieu avant (3) par l'intermédiaire d'une liaison pivotante ; dans lequel la liaison pivotante (10) de la barre de traction (9), et la plaque tournante (8) de l'essieu arrière (4) peuvent être déplacées entre et verrouillés dans de premières positions où la barre de traction (9) est perpendiculaire à l'essieu avant (3) et l'essieu arrière (4) est perpendiculaire à une direction longitudinale du cadre (6) et à de secondes positions où la barre de traction (9) est oblique par rapport à l'essieu avant (3) et l'essieu arrière (4) est oblique par rapport à la direction longitudinale du cadre.

2. Châssis selon la revendication 1, dans lequel dans les secondes positions, comme la barre de traction (9) est oblique à l'essieu avant (3) et l'essieu arrière (4) est oblique à la direction longitudinale du cadre (6), lorsque le châssis (1) est tiré par la barre de traction (9), le cadre (6) du châssis est amené à être oblique à une direction de mouvement.

3. Châssis selon la revendication 1, comprenant en outre un système d'actionneur (12, 13) pour déplacer la liaison pivotante (10) de la barre de traction (9) et la plaque tournante (8) de l'essieu arrière (4) entre les premières et secondes positions.

4. Remorque configurée pour être tirée par un tracteur (2) et ayant un châssis (1) selon la revendication 1.

5. Remorque selon la revendication 4, dans laquelle, lorsque la liaison pivotante (10) de la barre de traction (9) et la plaque tournante (8) de l'essieu arrière (4) sont réglées et verrouillées dans les secondes positions, une surface de support d'une roue côté gauche de la remorque est configurée pour exercer une charge sur une zone d'un côté gauche par rapport à une roue la plus à gauche du tracteur (2) et une surface de support d'une roue côté droit de la remorque est configurée pour exercer une charge sur une zone d'un côté droit par rapport à une roue la plus à droite du tracteur (2) lorsqu'il est en fonctionnement.

6. Procédé pour réduire le compactage du sol lors de la conduite dans un champ avec une remorque tirée, le procédé comprenant la fourniture d'une remorque ayant un châssis (1) selon la revendication 1 et, lorsque les roues du tracteur et de la remorque doivent suivre différents jalonnages afin de réduire un niveau de compactage du sol dans un champ, le réglage et le verrouillage de la liaison pivotante (10) de la barre de traction (9) et de la plaque tournante (8) de l'essieu arrière (4) dans les secondes positions.

7. Procédé selon la revendication 6 comprenant, lorsque les roues du tracteur et de la remorque doivent suivre deux jalonnages étroits, par ex. sur une route normale, le réglage et le verrouillage de la liaison pivotante (10) de la barre de traction (9) et de la plaque tournante (8) de l'essieu arrière (4) dans les premières positions.
